(19) Europäisches Patentamt
European Patent Office
Office européen des brevets

(11) **EP 1 656 705 B1**

(12) **EUROPÄISCHE PATENTSCHRIFT**

(45) Veröffentlichungstag und Bekanntmachung des Hinweises auf die Patenterteilung:
**16.07.2008 Patentblatt 2008/29**

(21) Anmeldenummer: **05734871.6**

(22) Anmeldetag: **20.04.2005**

(51) Int Cl.:
**H01L 41/09** (2006.01)

(86) Internationale Anmeldenummer:
**PCT/EP2005/004236**

(87) Internationale Veröffentlichungsnummer:
**WO 2006/027031 (16.03.2006 Gazette 2006/11)**

(54) **LINEARER ULTRASCHALLMOTOR**

LINEAR ULTRASOUND MOTOR

MOTEUR A ULTRASONS LINEAIRE

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **03.09.2004 DE 102004042767
14.10.2004 DE 102004050108
09.12.2004 DE 102004059429**

(43) Veröffentlichungstag der Anmeldung:
**17.05.2006 Patentblatt 2006/20**

(73) Patentinhaber: **Physik Instrumente (PI) GmbH & Co. KG
76228 Karlsruhe (DE)**

(72) Erfinder:
- **WISCHNEWSKIJ, Wladimir
76337 Waldbronn (DE)**
- **VYSHNEWSKYY Oleksiy
76744 Wörth (DE)**

(74) Vertreter: **Kruspig, Volkmar et al
Meissner, Bolte & Partner GbR
Postfach 86 06 24
81633 München (DE)**

(56) Entgegenhaltungen:
**EP-A- 0 595 426          US-A- 5 982 075
US-A1- 2001 015 591**

- **PATENT ABSTRACTS OF JAPAN Bd. 013, Nr. 002 (E-700), 6. Januar 1989 (1989-01-06) -& JP 63 213482 A (NEC CORP), 6. September 1988 (1988-09-06)**
- **PATENT ABSTRACTS OF JAPAN Bd. 009, Nr. 069 (E-305), 29. März 1985 (1985-03-29) -& JP 59 204477 A (NIHON KOUGAKU KOGYO KK), 19. November 1984 (1984-11-19) -& US 4 510 411 A (HAKAMATA ET AL) 9. April 1985 (1985-04-09)**

**Beschreibung**

Die Erfindung betrifft einen linearen Ultraschall-Piezomotor mit einem mit einer plattenförmigen, rechteckigen Resonanzplatte in Friktionskontakt stehenden beweglichen Element, wobei die Friktionsfläche über mindestens eine der Längsschmalseiten der Resonanzplatte ausgebildet ist, sowie gegenüberliegende Elektroden zum Generieren akustischer Schwingungen, wobei die Elektroden auf den Längsbreitseiten der Resonanzplatte angeordnet sind, gemäß Oberbegriff des Patentanspruchs 1.

Aus der US-PS 4,978,882 sind lineare Ultraschallmotoren vorbekannt, die nach dem Prinzip der piezoelektrischen Anregung in einem ringförmigen Oszillator als geschlossenem Wellenleiter arbeiten. Derartige Motoren weisen eine sehr komplizierte Konstruktion auf, wobei an einem ringförmigen Oszillator mehrere Piezoelemente z. B. durch Kleben stoffschlüssig zu fixieren sind. Derartige Motoren sind daher in der Fertigung sehr teuer und können nur begrenzt miniaturisiert werden.

Gemäß der US-PS 5,672,930 gehören Ultraschallmotoren zum Stand der Technik, die die Anregung einer laufenden Ultraschallwelle in einem Staboszillator, d.h. in einem offenen Wellenleiter nutzen. Nachteilig ist bei derartigen Motoren die Tatsache, dass es praktisch unmöglich ist, in einem offenen Wellenleiter eine rein laufende Ultraschallwelle anzuregen. Gleichzeitig mit der Anregung einer laufenden Welle wird nämlich in einem offenen Wellenleiter eine symmetrische stehende Welle angeregt, welche die Wirkungsweise des Friktionskontakts des Motors negativ beeinträchtigt. Dies wiederum führt zu einer starken Erwärmung der Friktionsoberflächen bzw. des gesamten Motors sowie zu einem hohen Geräuschpegel. Darüber hinaus erfordern diese Motoren des Standes der Technik eine sehr hohe Anregungsspannung und sind in der Fertigung teuer sowie kaum miniaturisierbar.

Eine weitere bekannte Lösung ist durch piezoelektrische Ultraschallmotoren beispielsweise gemäß DE 199 45 042 C2 gekennzeichnet. Bei derartigen Motoren werden im piezoelektrischen plattenförmigen Resonator gleichzeitig eine stehende Longitudinal- sowie eine Biegewelle angeregt. Als Resultat der Überlagerung beider Wellen erfährt ein am Resonator angeordnetes Stoßelement eine elliptische Bewegung. Dieses Stoßelement überträgt die Bewegung an ein an das Stoßelement angepreßtes kugelgelagertes bewegliches weiteres Element. Hier ist allerdings der Einsatz einer relativ teuren Kugellagerung insbesondere unter dem Kostenaspekt nachteilig.

Bei der Verwendung deutlich preiswerterer Gleitlagerungen sind Reibverluste in der Lagerung gegeben, die vergleichbar mit der vom Aktor entwickelten bzw. durch den Friktionskontakt übertragenen Nutzkraft sind. Aus diesem Grund ist die an sich naheliegende Abkehr vom Kugellager problematisch. Ein weiteres Problem liegt in der Ausführung der Kugellager aus magnetischen Materialien, so dass derartige Motoren für nichtmagnetische Anwendungen nicht eingesetzt werden können.

Aus der EP 0 595 426 A1 ist ein Zweiphasen-Ultraschallmotor vorbekannt, bei dem im Oszillator mit Hilfe von zwei Gruppen akustischer Generatoren eine Oberflächen-Wanderwelle oder Laufwelle erregt wird. Die Erregung der akustischen Generatoren dieses vorbekannten Motors erfolgt gleichzeitig durch zwei Wechselspannungsquellen mit einer Phasenverschiebung zwischen den Spannungen von $\pi/2$. Die Bewegungsrichtung wird durch eine Änderung des Winkels um den Betrag $\pi$ geändert. Der Ultraschall-Oszillator des Motors nach EP 0 595 426 A1 ist als ein Körper mit rechteckigem Querschnitt und den Seitenflächen A, B, C und D ausgeführt. Diese Querschnittsform ist nahe der quadratischen, wobei die akustischen Generatoren des vorbekannten Oszillators auf den Seiten A und C angeordnet sind, die etwas kleiner als die Seiten B und D sind, auf denen sich Friktionsoberflächen befinden. Die Arbeitsweise dieses Motors greift auf elliptische Bewegungen von Materialpunkten auf der Oberfläche des Oszillators zurück.

Aus der US 2001/0015591 A1 ist eine Lösung vorbekannt, die sich auf einen Zweiphasen-Ultraschallmotor bezieht, der mit einer Oberflächen-Laufwelle arbeitet. Dort werden als akustische Generatoren für die Laufwelle streifenförmige Elektroden eingesetzt, deren Erregung durch zwei Wechselspannungsquellen vorgenommen wird. Die Oberflächen-Laufwelle wird auf der Oberfläche der dünnen Platte generiert, die für diese Welle einen Wellenleiter darstellt. Es befinden sich sowohl die Generatoren der akustischen Schwingungen als auch die Friktionsoberfläche auf den Längsseiten der dortigen Platte. Auch bei diesem Motor greift die Funktion auf elliptische Bewegungen der Materialpunkte auf der Oberfläche des plattenförmigen Wellenleiters zurück.

Zum Stand der Technik sei noch die JP 59-204477 sowie das zugehörige Familienmitglied US 4,510,411 erwähnt. Die dort gezeigten Funktionsprinzipien gehen von einem Zweiphasen-Ultraschallmotor aus, der eine Biege-Laufwelle nutzt. Außerdem umfasst die Erregervorrichtung einen elektrischen Generator und einen Controller mit Stabilisierung der Arbeitsfrequenz auf der Basis einer gleichgerichteten Rückkopplungsspannung, die mit einer Stützspannung verglichen wird, um ein Fehlersignal bereitzustellen, das dann der Frequenzsteuerung dient.

Aus der US 5,982,075 ist ein Piezolinearmotor mit einer plattenförmigen, rechteckigen Resonanzplatte vorbekannt, dessen Funktionsweise auf der Erzeugung stehender Wellen beruht. Auch dort sind gegenüberliegende Elektroden zum Generieren akustischer Schwingungen vorhanden, die mit einer Anregungsquelle in Verbindung stehen.

Aus dem Vorgenannten ist es daher Aufgabe der Erfindung, einen weiterentwickelten linearen Ultraschall-Piezomotor mit einem mit einer plattenförmigen, rechteckigen Resonanzplatte in Friktionskontakt stehenden beweglichen Element anzugeben, wobei der Motor nur eine geringe Baugröße aufweisen soll und die Gesamtkonstruktion einfach und mit einer geringen Teileanzahl möglich ist.

Auch soll bei dem zu schaffenden Motor die Anregungsspannung gering sein und eine Erhöhung des Wirkungsgrads eintreten. Durch den zu schaffenden neuartigen Konstruktionsaufbau der Motoren sollen sich diese insbesondere zum Einsatz in Geräten der Feinpositionierung, wie z. B. in miniaturisierten Koordinatentischen, in Mikrorobotern oder dergleichen mechatronischen Geräten eignen.

Die Lösung der Aufgabe der Erfindung erfolgt mit einem linearen Ultraschall-Piezomotor gemäß der Merkmalskombination nach Patentanspruch 1, wobei die Unteransprüche zweckmäßige Ausgestaltungen und Weiterbildungen darstellen.

Der Generator zur Erzeugung akustischer Schwingungen ist bezüglich einer die Resonanzplatte symmetrisch quer schneidenden Ebene asymmetrisch angeordnet und weist zwei gegenüberliegende Elektroden auf, welche bei Anregung eine stehende asymmetrische Raumwelle erzeugen.

Mit einer solchen Konstruktion des Generators zur Erzeugung der notwendigen Schwingungen ist nicht nur die Anregung der vorerwähnten asymmetrischen Raumwelle möglich, sondern es kann die Länge des Friktionskontakts deutlich vergrößert sowie eine einfache Anordnung der Friktionsfläche am Oszillator und des Friktionselements am zu bewegenden Element realisiert werden.

Durch eine erfindungsgemäß beidseitig der symmetrisch quer schneidenden Ebene vorgenommene Anordnung je eines Generators zur Erzeugung akustischer Schwingungen besteht die Möglichkeit, über ein Umschalten der Generatoren eine Bewegungsumkehr des beweglichen Elements zu erzielen, so dass in einfacher Weise hin- und hergehende Bewegungen erzeugt werden können.

Mindestens eine der Längsschmalseiten kann eine Führungsnut, eine Führungsrille oder eine Führungsschiene aufweisen, wobei die Führungsnut, Führungsrille oder Führungsschiene eine verschleißfeste Beschichtung aufweist oder aus einem derartigen Material besteht.

Das bewegliche Element kann als Federklammer ausgeführt werden, welche mit den Längsschmalseiten in mechanischer Wirkverbindung steht.

Die Federklammer kann z. B. eine U- oder V-Form aufweisen, wobei die freien Schenkel ein Friktionselement tragen und das Friktionselement jeweils eine der Führungsnut, Führungsrille oder -schiene komplementäre Gestalt besitzt.

Die Schenkel der Federklammer schließen bei einer Ausführungsform der Erfindung einen Befestigungsbereich oder Befestigungsabschnitt ein, welcher als Halterung für ein zu bewegendes Objekt, insbesondere eine Linse ausgebildet ist.

Die Resonanzplatte des Ultraschall-Piezomotors kann aus einem monolithischen piezoelektrischen Material bzw. Körper bestehen, wobei dann Teile dieses Körpers über die entsprechenden Anregungselektroden die Funktion des Generators zur Erzeugung akustischer Schwingungen erfüllen.

Alternativ besteht die Möglichkeit, die Resonanzplatte aus einem Nichtpiezo-Material zu fertigen, wobei die Generatoren zur Erzeugung akustischer Schwingungen mit der Resonanzplatte mechanisch starr verbunden werden.

Bei dem Verfahren zum elektrischen Betreiben eines linearen Ultraschall-Piezomotors wie vorstehend erläutert wird die Anregungsquelle bevorzugt als stromrückgekoppelter, selbstregeinder Generator mit fester Arbeitsfrequenz ausgebildet, wobei die Arbeitsfrequenz durch diejenige Resonanzfrequenz des Piezooszillators vorgegeben ist, welche zur Anregung einer stehenden asymmetrischen Raumwelle führt.

Es besitzt also der Oszillator des Ultraschall-Piezomotors eine bevorzugt rechteckige Resonanzplatte mit mindestens einer glatten Friktionsfläche. Das bewegliche Element beinhaltet mindestens ein Friktionselement, das mit der Friktionsfläche des Oszillators in Wirkverbindung steht. Die Generatoren und demnach auch die Elektroden zur Erzeugung akustischer Schwingungen des Oszillators sind dabei asymmetrisch in Bezug auf eine die Platte quer schneidende Symmetrieebene angeordnet. Aufgrund einer derartigen Anordnung wird bei der elektrischen Anregung des Ultraschallmotors im Oszillator eine asymmetrische akustische stehende Raumwelle erzeugt, die das bewegliche Element antreibt.

Ausgestaltend kann der erfindungsgemäße Motor derart ausgeführt werden, dass der Ultraschalloszillator zwei Generatoren akustischer Schwingungen aufweist, wobei jeder der Generatoren asymmetrisch in Bezug auf eine die Platte quer schneidende Symmetrieebene angeordnet ist und außerdem ein Umschalter vorgesehen wird, der entweder den einen oder den anderen Generator mit der notwendigen elektrischen Anregungsquelle verbindet, wodurch in Folge die bereits oben erläuterte Umkehrbewegung des beweglichen Elements möglich wird.

Die Friktionsfläche des erfindungsgemäßen Motors kann entweder in einer oder in beiden Führungsrillen angeordnet werden, die sich an den Längsschmalseiten der Oszillatorplatte befinden. Außerdem kann die Friktionsfläche an einer Führungsschiene angeordnet werden, die sich ebenfalls an einer der beiden Längsschmalseiten der Oszillatorplatte befindet. Beides ermöglicht die Fixierung des beweglichen Teils in der zu seiner Bewegung senkrechten Richtung.

Im Sinne einer Vergrößerung der Lebensdauer und zur Verbesserung der Langzeitstabilität kann bei jeder Ausführungsform des erfindungsgemäßen Motors die Oberfläche der Führungsrille oder der Führungsschiene mit einer verschleißfesten Schicht oder Zwischenschicht versehen werden, auf die dann die eigentliche Friktionsschicht aufgebracht wird.

Bei einer Ausführungsform des erfindungsgemäßen Motors ist eine zweiteilige Lösung für das bewegliche Element gewählt. Hierbei wird jedes Teil in Bezug auf das gegenüberliegende Teil in Richtung der Friktionsfläche federnd gelagert, so dass der Einsatz von speziellen Linearführungen entfallen kann.

Bezüglich der vorerwähnten Ausführungsform des selbstregelnden Generators (Autogenerators) ist eine kontinuierliche Nachführung der Resonanzfrequenz des Ultraschallmotors möglich, so dass auch unter diesem Aspekt eine verbesserte Funktionsstabilität der Gesamtanordnung gegeben ist.

Die Erfindung soll nachstehend anhand verschiedener Ausführungsbeispiele sowie unter Zuhilfenahme von Figuren näher erläutert werden.

Hierbei zeigen:

Fig. 1    eine Darstellung der ersten Ausführungsform des erfindungsgemäßen Motors;

Fig. 2    eine beispielhafte Beschaltung des Motors gemäß der ersten Ausführungsform der Erfindung;

Fig. 3    ein erstes Beispiel zur Erläuterung des Aufbaus des Generators zur Erzeugung akustischer Schwingungen;

Fig. 4    ein zweites Beispiel des Aufbaus des Generators zur Erzeugung akustischer Schwingungen;

Fig. 5    Abbildungen bezüglich der Verformung des Oszillators bzw. Generators zur Erzeugung akustischer Schwingungen;

Fig. 6    Bewegungsbahnen von Punkten entlang der Längsschmalseiten 11 der rechteckigen Platte 5;

Fig. 7    eine Prinzipdarstellung der entstehenden Kräfte beim Betrieb des Motors;

Fig. 8    ein Ausführungsbeispiel des Motors mit verlängertem Oszillator;

Fig. 9    eine Ausführungsvariante der rechteckigen Platte aus einem z. B. Stahlmaterial mit z. B. aufgeklebten Generatoren 6;

Fig. 10    verschiedene Ausführungsvarianten der piezoelektrischen Elemente für eine Motorausführung mit zusammengesetztem Oszillator;

Fig. 11    verschiedene Teilschnittdarstellungen zu Varianten bezüglich der Ausgestaltung der Führungsrillen, Führungsnuten, Führungsschienen bzw. der Friktionsflächen;

Fig. 12    eine beispielhafte Realisierungsform des erfindungsgemäßen Motors mit einer Halterung für ein optisches Element, insbesondere eine zu bewegende Linse, und

Fig. 13    ein Blockschaltbild des selbstregelnden, Strom-rückgekoppelten Generators zum Betreiben des erfindungsgemäßen Motors.

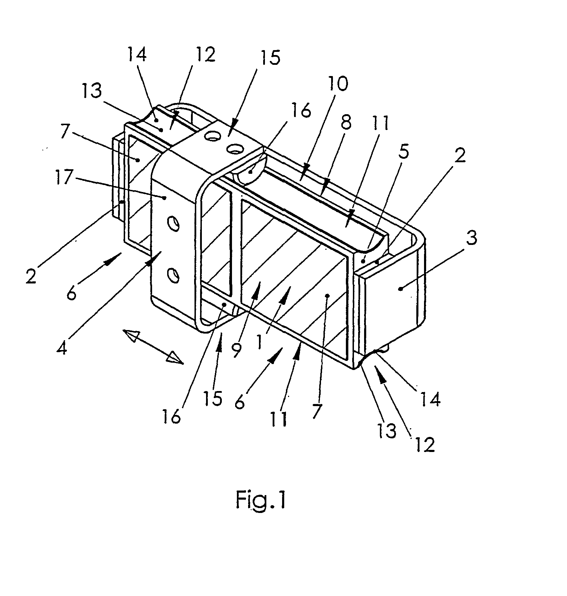

Gemäß der Darstellung nach Fig. 1 besitzt der erfindungsgemäße Motor einen Ultraschalloszillator 1, der durch schwingungsdämpfende Unterlagen 2 in einer Halterung 3 befindlich ist. Weiterhin ist das bewegliche Element 4 gezeigt, welches mit dem Oszillator in Friktionswirkung steht. Der Ultraschalloszillator 1 besteht aus einer rechteckigen Resonanzplatte 5 sowie Generatoren zur Erzeugung akustischer Schwingungen 6.

Grundsätzlich sind zwei konstruktive Varianten des erfindungsgemäßen Motors realisierbar.
In einer ersten Ausführungsform wird die Platte 5 vollständig aus einem piezoelektrischen Werkstoff gefertigt, z.B. aus Blei-Titanat-Zirkonat, Barium-Titanat, kristalliner Quarz, Lithium-Niobat oder ähnlichen piezoelektrischen Werkstoffen.

Jeder der Generatoren akustischer Schwingungen 6 schließt eine Anregungselektrode 7 ein (Fig. 1) sowie eine gemeinsame Rückelektrode 8. Beide Elektroden befinden sich an den Längsbreitseiten 9 und 10 der Platte 5. In dieser Ausführungsform stellt jeder Generator akustischer Schwingungen 6 einen Teil der piezoelektrischen Platte 5 dar. Der Oszillator selbst ist hierbei als monolithischer, piezoelektrischer Körper ausgeführt.

Bei der zweiten Ausführungsvariante des Motors ist der Oszillator 1 als ein zusammengesetzter Oszillator ausgebildet. Hierbei werden die Generatoren 6 mit der Platte 5 verbunden.

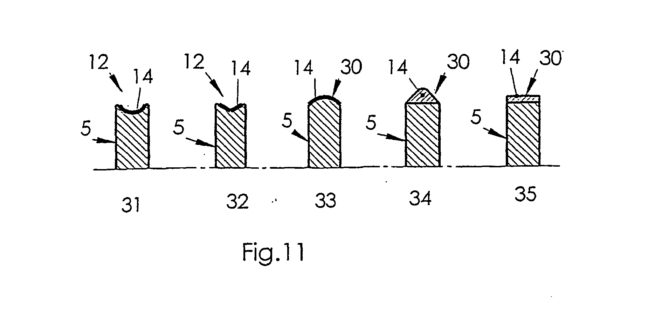

Bei beiden Ausführungsformen befinden sich auf den Längsschmalseiten 11 der Platte 5 entweder Führungsrillen 12 (Fig. 1) oder Führungsschienen 30 (Fig. 11). Die Friktionsfläche 13 ist unmittelbar auf der verschleißfesten Schicht 14 befindlich.

Zur Verhinderung eines abnormalen Verschleißes des Friktionskontakts des Motors wird die verschleißfeste Schicht 14 auf die Oberfläche der Führungsrille 12 oder Führungsschiene 30 als dünner verschleißfester Film aus Metall, Keramik, Glas oder eines anderen diesbezüglich optimierten Werkstoffs aufgebracht.

Im Falle der Ausführungsform des Motors mit Führungsschiene kann die verschleißfeste Schicht als eine dünne Platte ausgeführt werden, wobei diese mittels Klebeverbindung auf die Längsschmalseite 11 der Platte 5 aufgebracht wird.

Das bewegliche Element 4 des Motors kann aus zwei Teilen 15 bestehen, wobei jedes davon mit einem in der Führungsrille 12 befindlichen Friktionselement 16 ausgestattet ist. Jedes der Teile 15 kann außerdem mit Hilfe der Feder 17 in Bezug auf das andere Teil 15 derart gefedert fixiert werden, dass die Friktionselemente 16 elastisch an die Friktionsoberfläche 13 angepresst werden. Die Feder 17 kann in diesem Fall als eine Halterung des zu bewegenden Elements, z. B. eines Verstellers, Magnetkopfes oder eines ähnlichen Geräts dienen.

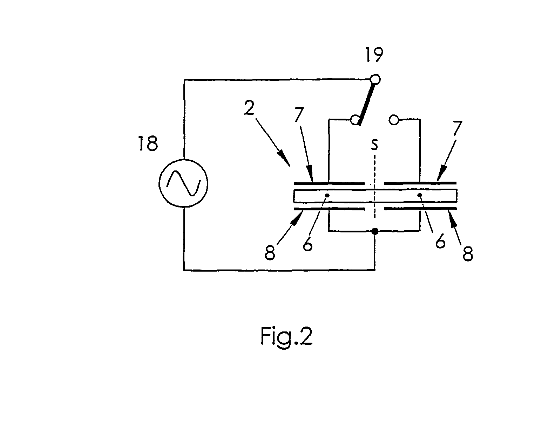

Fig. 2 zeigt einen beispielhaften Beschaltungsplan des Oszillators mit einer elektrischen Anregungsquelle 18. Gemäß dem Funktionsprinzip des erfindungsgemäßen Motors wird abhängig von der Bewegungsrichtung des beweglichen Elements 4 die elektrische Anregungsquelle 18 an einen betreffenden Generator 6 angeschlossen. Die Umschaltung der Generatoren findet dann je nach gewünschter Bewegungsrichtung über den Umschalter 19 statt.

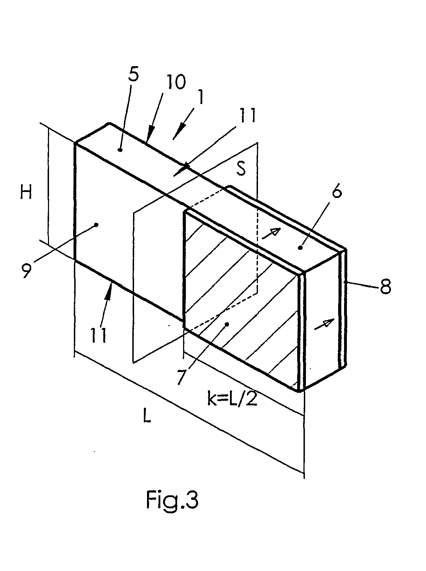

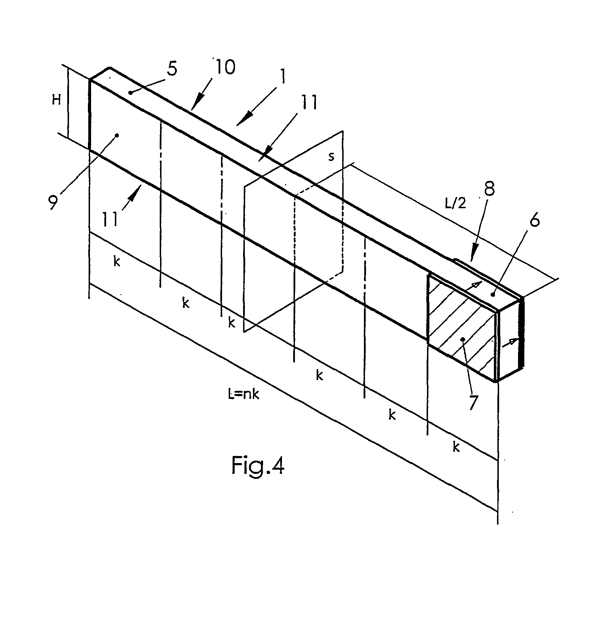

Die Fig. 3 und 4 veranschaulichen verschiedene Konstruktionsvarianten des Oszillators 1. Zur Erklärung der Konstruktion des Oszillators 1 sowie der Funktionsweise des Motors ist in den Fig. 3 und 4 die Symmetrieebene S dargestellt, die die Platte 5 quer schneidet. Die Ebene schneidet die Platte in der Mittel ihrer Länge L, verläuft senkrecht zur großen Seite 9 und ist ebenfalls senkrecht zu den Längsschmalseiten 11 ausgeführt.

Der Generator zur Erzeugung akustischer Schwingungen 6 des Oszillators 1 ist in Bezug auf die Symmetrieebene S asymmetrisch, d.h. nur auf einer Seite für die entsprechende Bewegungsrichtung angeordnet.

Fig. 3 zeigt den Oszillator 1 zum Anregen einer asymmetrischen akustischen Raumwelle erster Ordnung. In diesem Fall beträgt das Verhältnis der Plattenlänge L zu ihrer Höhe H ca. 2 bis 3 (L/H=2 bis 3).

Gemäß Fig. 4 ist es ebenfalls möglich, einen verlängerten Oszillator vorzusehen, und zwar zum Anregen asymmetrischer stehender Raumwellen höherer, z. B. sechster Ordnung. Die Wellenordnung wird durch die Länge der Platte 5 bestimmt. Sie wird aus dem Verhältnis L=n•K gewählt, wobei n=4, 6, 8... und K=0,7 bis 1•H ist.

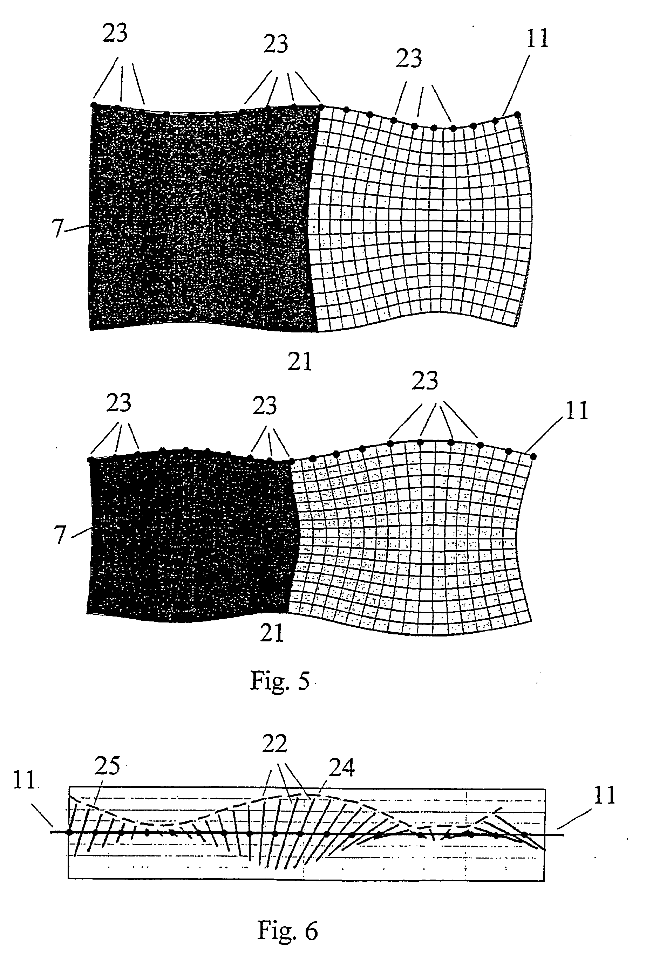

Gemäß Fig. 5, Position 20 und 21 sind Deformationen der Platte 5 des Oszillators 2 gezeigt, und zwar beim Anregen einer asymmetrischen stehenden Raumwelle erster Ordnung. Die Bilder entsprechen den Grenzfällen der Deformation, die zeitlich um eine halbe Schwingungsperiode T/2 auseinander liegen.

Die Fig. 6 zeigt Bewegungsbahnen 22 der Punkte 23, die auf den Längsschmalseiten 11 der Platte 5 liegen, und zwar beim Anregen der in Fig. 5 dargestellten stehenden Welle erster Ordnung. Es ist hier zu erkennen, dass für die stehende Welle erster Ordnung ein Maximum 24 auf der Amplitudenkurve 25 vorhanden ist.

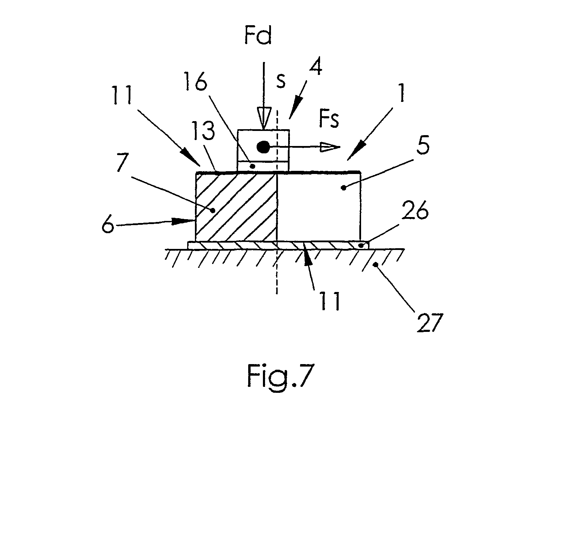

Fig. 7 zeigt die Funktionsweise des Motors auf der Basis der wirkenden mechanischen Kraftkomponenten.

Der Oszillator 1 stützt sich an einer Seite über eine schallisolierende Unterlage 26 an einem feststehenden Grundkörper 27 ab. An die gegenüberliegende Seite 11 des Oszillators 1 wird durch die Kraft $F_d$ das bewegliche Element 4 angepresst. Die Längsschmalseite 11 ist mit der Friktionsoberfläche 13 und das bewegliche Element mit dem Friktionselement 16 ausgestattet. Als Resultat der Einwirkung der bei Anregung des Oszillators wirkenden Kräfte auf das bewegliche Element 4 entsteht eine Kraft $F_s$, die die Bewegung des beweglichen Elements erzeugt.

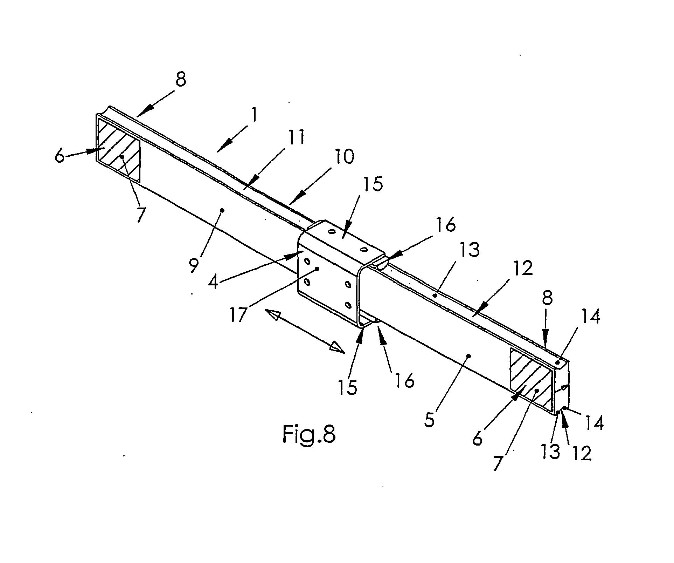

Fig. 8 zeigt eine Ausführungsvariante des Motors mit einem verlängerten Oszillator, dessen Wirkungsweise derjenigen entspricht, wie in der Fig. 4 dargestellt.

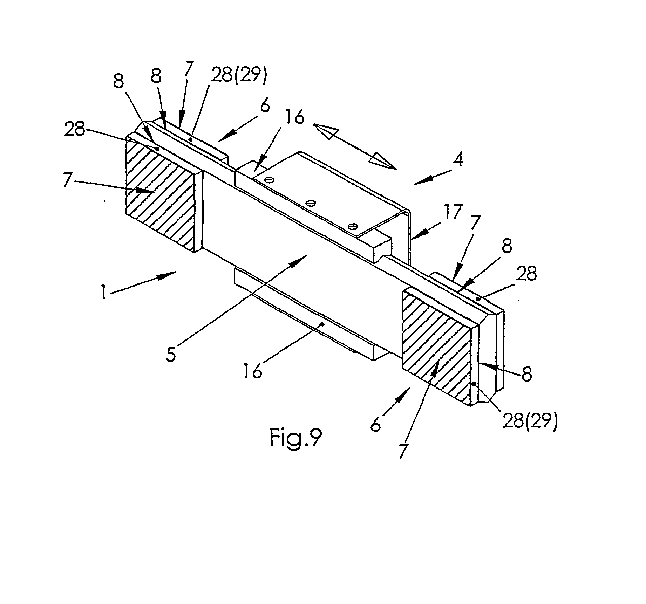

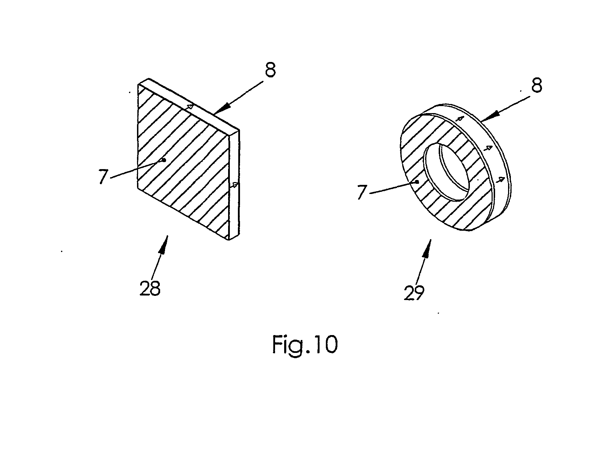

Fig. 9 zeigt eine Ausführungsvariante des Motors mit zusammengesetztem Oszillator 1. Bei dieser Variante wird die Resonanzplatte 5 aus einem nicht piezoelektrischen Werkstoff hergestellt, z. B. aus Stahl, Keramik, Metall-Keramik, einem Monokristall oder ähnlichen Stoffen. Die Generatoren akustischer Schwingungen 6 werden dabei als piezoelektrische Elemente ausgeführt, die mit der Platte 5 starr verbunden sind. Als derartige Generatoren können piezoelektrische Platten 28 oder Scheiben 29 verwendet werden mit entsprechend auf ihren Oberflächen befindlichen Elektroden 7 und 8 (siehe Fig. 10).

Fig. 11 zeigt Varianten von Rillen 12 oder Schienen 30. Die Rillen 12 können dabei ein rundes oder dreieckiges Querschnittsprofil aufweisen (Position 31 und 32). Die Schienen 30 können ebenfalls ein rundes, dreieckiges oder viereckiges Profil besitzen (Position 33, 34, 35).

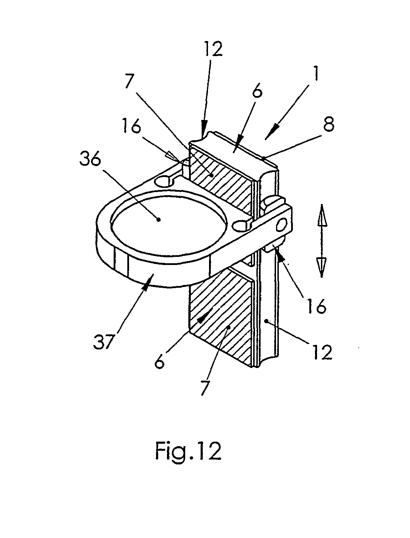

Gemäß Fig. 12 soll ein erfindungsgemäßer Motor beispielhaft für das Verstellen einer in der Halterung 37 befindlichen Linse 36 eines Objektivs eingesetzt werden.

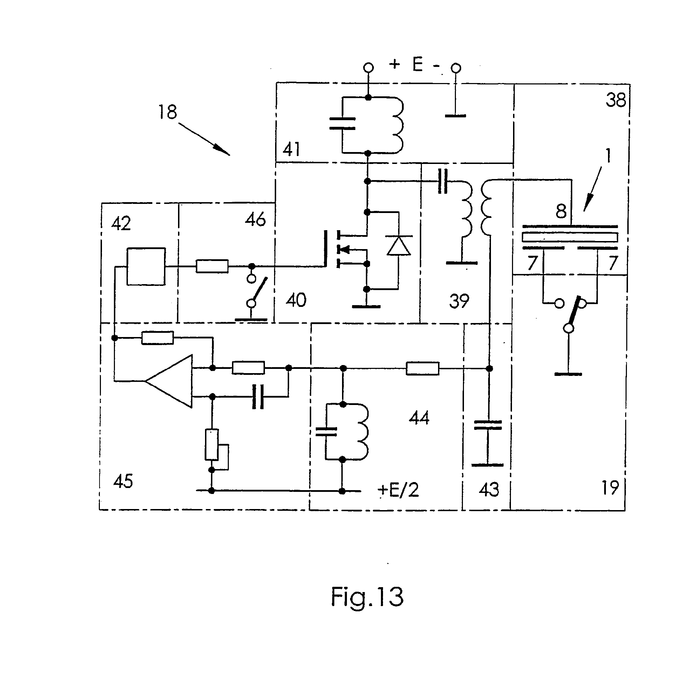

Die Fig. 13 offenbart eine mögliche schaltungstechnische Variante der elektrischen Anregungsquelle 18, die nach dem Prinzip eines selbstregulierenden Generators aufgebaut ist. Der anzutreibende Motor ist mit dem Bezugszeichen 38 versehen. Weiterhin ist ein Umschalter 19, ein Anpassungsglied 39, ein Stromumschalter 40, eine Stromquelle 41, ein Treiber 42, ein Rückkopplungsglied 43, ein Filter 44, ein Phasenschieber 45 sowie eine Ausschaltvorrichtung 46 vorgesehen.

Die Wirkungsweise des Motors ist wie nachstehend erläutert.

Beim Anschließen des Motors an die elektrische Anregungsquelle 18 (siehe Fig. 2) werden die Elektroden 7 oder 8 des Generators 6 mit einer elektrischen Wechselspannung beaufschlagt, und zwar mit einer Frequenz, die der Arbeitsfrequenz $F_a$ des Oszillators 1 entspricht. Bei der Frequenz $F_a$ wird im Oszillator 1 eine asymmetrische stehende Raumwelle angeregt, die je nach Länge L des Oszillators der ersten, zweiten oder höheren Ordnung entsprechen kann. Die Ordnung der angeregten Stehwelle entspricht dabei der Anzahl der Maxima der Amplitudenkurve.

So besitzt die Stehwelle erster Ordnung ein Maximum (siehe Fig. 5, 6), die Stehwelle zweiter Ordnung zwei Maxima, die Stehwelle dritter Ordnung drei Maxima und so weiter.

Die Arbeitsfrequenz $F_a$ entspricht der Resonanzfrequenz der Platte 5 für die asymmetrische Stehwelle und ist von den Abmessungen der Platte sowie von den Materialeigenschaften dieser abhängig.

Der Wert der Arbeitsfrequenz $F_a$ kann aus der Beziehung $F_a=m\cdot N/L$ bestimmt werden, wobei L die Plattenlänge, N die Frequenzkonstante für die genutzte Art der Stehwelle und m die Ordnung der Welle (m=1, 2, 3 und so weiter) ist.

So beträgt beispielsweise die Frequenzkonstante für die Welle erster Ordnung (m=1) sowie für die Platte 5 aus einem Piezokeramikmaterial PIC181 der Firma PI Ceramic GmbH N=39600kHz•mm, d.h. das für die Plattenlänge L=10mm $F_a$=396kHz; für L=20mm $F_a$=198kHz und für L=30mm $F_a$=132kHz ist.

Beim Anregen einer asymmetrischen stehenden Raumwelle im Oszillator 1 (siehe Fig. 5) schwingen die an den Längsschmalseiten 11 der Platte 5 liegenden Punkte 23 der Friktionsoberfläche 13 entlang der Bewegungsbahnen 22 (siehe Fig. 6). Die Bewegungsbahnen dieser Punkte stellen gerade Linien dar, die zu den Oberflächen der Längsschmalseiten je nach Position unterschiedlich geneigt sind. Das auszeichnende Merkmal asymmetrisch stehender Wellen ist die vorzugsweise gleiche Neigung dieser Linien 22 (Schwingbahnen der Punkte) im zentralen Bereich der Platte 5. Für die in den Fig. 5 und 6 dargestellte stehende Welle erster Ordnung weisen diese Linien eine vom Generator 6 weg gerichtete Neigung auf.

Diese vorzugsweise Neigung der Bewegungsbahnen der Punkte führt zum Entstehen einer Kraft $F_d$, die ebenfalls in Richtung der vorzugsweisen Neigung der Bewegungsbahnen 22 orientiert ist. Diese Kraft ist das Resultat der Kräfteaddition aller Punkte der Friktionsfläche 13 bezogen auf das Friktionselement 16. Die Kraft $F_s$ wirkt auf das Friktionselement 16 und verursacht eine Verschiebung des beweglichen Elements 4 in die Wirkrichtung dieser Kraft.

Über das Umschalten der Anregungsquelle 18 von einem Generator 6 auf den anderen Generator mit Hilfe des Umschalters 19 (Fig. 2) ist eine Änderung der Neigungsrichtungen der Bewegungsbahnen 22 in entgegengesetzter Orientierung möglich, was dann zur Umkehr der Bewegung des beweglichen Elements führt.

Bei Ultraschallmotoren mit Anregung asymmetrisch stehender Raumwellen erster Ordnung (Fig. 1, 3, 12), ist die Verfahrlänge des beweglichen Elements 4 auf 0,3L bis 0,4L begrenzt. Die Länge des Verstellbereichs ist von der Länge des Friktionselements 16 abhängig und beträgt im maximalen Grenzfall ca. 0,5L. In Motoren mit Anregung bei höheren Wellenordnungen (Fig. 4, 8, 9) kann der Verstellbereich des Wert 0,7L erreichen. Bei diesen Motoren ist die Länge des Friktionselements 16 nicht kleiner als der Abstand zwischen zwei Schwingungsmaxima 24. In diesem Fall werden von dem Friktionselement zwei oder mehrere Maxima überdeckt, was die Entstehen einer genügend gleichmäßigen Antriebskraft längs der gesamten Länge der Platte 5 zu erreichen gestattet.

Die elektrische Anregungsquelle 18 des erfindungsgemäßen Motors kann entweder eine elektrische Wechselspannung mit einer festen Frequenz zur Anregung des Motors generieren oder aber auch als ein selbstregulierender Generator (Autogenerator) 18 ausgeführt werden, wobei die Frequenz des Autogenerators durch den Oszillators 1 vorgegeben wird. Eine Blockschaltbildvariante einer derartigen Anregungsquelle ist in der Fig. 13 gezeigt.

Die gezeigte Schaltung stellt einen Strom-rückgekoppelten selbstregulierenden Generator dar, wobei der Strom über die Elektroden 7, 8 geführt wird. Um die Anregungsfrequenz der Schaltung auf der Arbeitsfrequenz $F_a$ des Oszillators 1 zu halten, wird dabei die Phasenabhängigkeit zwischen der Anregungsspannung am Oszillator und dem durch den Oszillator fließenden Strom benutzt. Auf der Oszillatorresonanzfrequenz $F_a$, d.h. der Frequenz, auf der die asymmetrische Stehwelle angeregt wird, weist diese Abhängigkeit eine Null-Phasenverschiebung auf.

Beim Beaufschlagen der Elektroden 7, 8 des Oszillators 1 mit einer elektrischen Anregungsspannung fällt über das Rückkopplungselement 43 eine elektrische Spannung ab, die bezüglich des durch den Oszillator fließenden Stroms um einen Winkel von -90° verschoben ist. Dieser Spannungsabfall dient als Rückkopplungssignal. Das Rückkopplungssignal wird weiter an das Filter 44 geleitet, wobei mit Hilfe eines Phasenschiebers eine Phasenverdrehung vorgenommen wird, so dass die gesamte Phasenverschiebung der Schleife im Bereich der Arbeitsfrequenz $F_a$ den Nullgrad-Wert erreicht. Nach Verstärkung mit Hilfe des Treibers 42 wird die Rückkopplungsspannung an den Leistungstransistor der Stromschalters 40 zur Steuerung gegeben. Der Stromschalter 40 schaltet den durch die Stromquelle 41 fließenden Strom zwischen Masse und dem Anpassglied 39 um.

Neben der Aufgabe, die Rückkopplungsspannung zu filtern, hat der Bandpass 44 noch die Funktion, die Frequenzbandbreite der Schaltung zu begrenzen, so dass im Bereich des Verstärkungsfaktors größer als eins ein weiterer Phasennulldurchgang nicht in Erscheinung tritt. Im Ergebnis schwingt sich das System nur auf der Arbeitsfrequenz $F_a$ ein, da nur für diese Frequenz die Anschwingbedingungen des Gesamtsystems erfüllt werden.

Das Abschalten kann entweder durch ein Unterbrechen der Versorgungsspannung E oder durch eine Betätigung der Abschaltvorrichtung 46 erfolgen. Im letzteren Fall wird der Rückkopplungszweig kurzgeschlossen, wodurch die Selbstanregung der Schaltung entfällt.

Mit dem erfindungsgemäßen Motor können im Vergleich zum Bekannten Reduzierungen der Baugröße um die Faktoren 1,5 bis 2 erreicht werden. Der Motor weist eine sehr einfache Konstruktion auf und es ist ein Versicht auf den Einsatz von Kugellagern möglich. Es hat sich gezeigt, dass bei erfindungsgemäß reduzierten Motoren eine drei- bis viermal kleinere Amplitude der Anregungsspannung bei gleicher Funktionalität im Vergleich zu bekannten Motoren gegeben ist, woraus eine höhere Effektivität, d. h. ein verbesserter Wirkungsgrad resultiert.

**Patentansprüche**

1. Linearer Ultraschall-Piezomotor mit einem mit einer plattenförmigen, rechteckigen Resonanzplatte (5) in Friktionskontakt stehenden beweglichen Element (4), wobei die Friktionsfläche (13) über mindestens eine der Längsschmalseiten (11) der Resonanzplatte (5) ausgebildet ist, sowie gegenüberliegende Elektroden (7; 8) zum Generieren akustischer Schwingungen, wobei die Elektroden (7; 8) auf den Längsbreitseiten (9; 10) der Resonanzplatte (5) angeordnet sind, weiterhin mit Generatoren (6) zur Erzeugung akustischer Schwingungen, die bezüglich einer die Resonanzplatte (5) symmetrisch quer schneidenden Ebene (S) asymmetrisch angeordnet sind, und die Elektroden (7; 8) mit einer Anregungsquelle (18) in Verbindung stehen, **dadurch gekennzeichnet, dass** beidseitig der symmetrisch quer schneidenden Ebene (S) je ein Generator (6) zur Erzeugung akustischer Schwingungen für je eine Bewegungsrichtung angeordnet ist, wobei die Generatoren (6) zur Umkehr der Bewegungsrichtung des beweglichen Elements (4) mittels eines Umschalters (19) getrennt ansteuerbar sind und die akustischen Schwingungen als stehende asymmetrische Raumwelle vorliegen.

2. Piezomotor nach Anspruch 1,
**dadurch gekennzeichnet, dass**
die Generatoren (6) eine gemeinsame Rückseitenelektrode (8) aufweisen.

3. Piezomotor nach einem der Ansprüche 1 oder 2,
**dadurch gekennzeichnet, dass**
mindestens eine der Längsschmalseiten (11) eine Führungsnut, Führungsrille oder Führungsschiene (12; 30) aufweist.

4. Piezomotor nach Anspruch 3,
**dadurch gekennzeichnet, dass**
die Führungsnut, Führungsrille oder Führungsschiene (12; 30) eine verschleißfeste Beschichtung (14) aufweist oder aus einem derartigen verschleißfesten Material besteht.

5. Piezomotor nach einem der vorangegangenen Ansprüche,
**dadurch gekennzeichnet, dass**
das bewegliche Element (4) als Federklammer (17) ausgeführt ist, welche mit den Längsschmalseiten (11) in mechanischer Wirkverbindung steht.

6. Piezomotor nach Anspruch 5,
**dadurch gekennzeichnet, dass**
die Federklammer (17) eine U- oder V-Form aufweist, wobei die freien Schenkel ein Friktionselement (16) tragen und das Friktionselement (16) jeweils eine der Führungsnut, Führungsrille oder -schiene (12; 30) komplementäre Gestalt besitzt.

7. Piezomotor nach Anspruch 6,
**dadurch gekennzeichnet, dass**
die Schenkel der Federklammer (17) einen Befestigungsbereich oder Befestigungsabschnitt einschließen, welcher als Halterung (37) für ein zu bewegendes Element, insbesondere eine Linse (36) ausgebildet ist.

8. Piezomotor nach einem der vorangegangenen Ansprüche,
**dadurch gekennzeichnet, dass**
die Resonanzplatte (5) aus einem monolithischen piezoelektrischen Körper besteht.

9. Piezomotor nach einem der Ansprüche 1 bis 7,
**dadurch gekennzeichnet, dass**
die Resonanzplatte (5) aus einem Nicht-Piezomaterial besteht, wobei die Generatoren (6) zur Erzeugung akustischer Schwingungen mit der Resonanzplatte (5) mechanisch starr verbunden sind.

10. Verfahren zum elektrischen Betreiben eines linearen Ultraschall-Piezomotors nach den Merkmalen mindestens eines der vorangegangenen Ansprüche,
**dadurch gekennzeichnet, dass**
die Anregungsquelle als Strom-rückgekoppelter, selbstregelnder Generator mit fester Arbeitsfrequenz ($F_a$) ausgebildet ist, wobei die Arbeitsfrequenz ($F_a$) durch diejenige Resonanzfrequenz des Piezooszillators vorgegeben ist, welche zur Anregung einer stehenden asymmetrischen Raumwelle führt gemäß der Beziehung:

$$F_a = m \cdot N/L$$

mit L = Länge der Resonanzplatte
N = Frequenzkonstante
m = Ordnung der Welle.

## Claims

1. A linear ultrasonic piezoelectric motor, comprising a mobile element (4) that is in frictional contact with a plate-shaped rectangular resonance plate (5), wherein the frictional surface (13) is formed by at least one of the longitudinal narrow sides (11) of the resonance plate (5), and opposite electrodes (7; 8) for generating acoustic vibrations, wherein the electrodes (7; 8) are arranged on the longitudinal wide sides (9; 10) of the resonance plate (5), further comprising generators (6) for generating acoustic vibrations, which are arranged asymmetrically in relation to a plane (S) symmetrically intersecting the resonance plate (5), and the electrodes (7; 8) are connected to an excitation source (18), **characterized in that** a generator (6) is each arranged on both sides of the symmetrically intersecting plane (S) for generating acoustic vibrations for each direction of movement, wherein the generators (6) are separately controllable by means of a changeover switch (19) to reverse the direction of movement of the mobile element (4) and the acoustic vibrations form a stationary asymmetrical space wave.

2. The piezoelectric motor according to claim 1, **characterized in that** the generators (6) have a common back electrode (8).

3. The piezoelectric motor according to one of claims 1 or 2, **characterized in that** at least one of the longitudinal narrow sides (11) comprises a guide groove, a guide channel or a guide rail (12; 30).

4. The piezoelectric motor according to claim 3, **characterized in that** the guide groove, the guide channel or the guide rail (12; 30) has a wear-resistant coating (14) or is made of such a wear-resistant material.

5. The piezoelectric motor according to one of the preceding claims, **characterized in that** the mobile element (4) is embodied as a spring clip (17) which is mechanically operatively connected to the longitudinal narrow sides (11).

6. The piezoelectric motor according to claim 5, **characterized in that** the spring clip (17) is U-shaped or V-shaped, with the free legs carrying a friction element (16) and the friction element (16) having a shape complementary to each one of the guide groove, guide channel or guide rail (12; 30).

7. The piezoelectric motor according to claim 6, **characterized in that** the legs of the spring clip (17) include an attachment portion or attachment section which is formed as a holder (37) for a mobile element, particularly a lens (36).

8. The piezoelectric motor according to one of the preceding claims, **characterized in that** the resonance plate (5) is made of a monolithic piezoelectric body.

9. The piezoelectric motor according to one of claims 1 to 7, **characterized in that** the resonance plate (5) is made of a non-piezoelectric material, wherein the generators (6) for generating acoustic vibrations are mechanically rigidly connected to the resonance plate (5).

10. A method for electrically operating a linear ultrasonic piezoelectric motor according to the features of at least one of the preceding claims, **characterized in that** the excitation source is embodied as a current feedback self-adjusting generator having a fixed working frequency ($F_a$), with the working frequency ($F_a$) being predefined by that resonance frequency of the piezoelectric oscillator that leads to the excitation of a stationary asymmetrical space wave according to the relation:

$$F_a = m \cdot N/L$$

wherein L = length of the resonance plate
N = frequency constant
m = order of the wave.

## Revendications

1. Piézomoteur linéaire à ultrasons, comportant un élément (4) mobile se trouvant en contact de friction avec une plaque de résonance (5) rectangulaire en forme de plaque, la surface de friction (13) étant réalisée via au moins un des petits côtés longitudinaux (11) de la plaque de résonance (5), ainsi que via des électrodes (7 ; 8) opposées l'une à l'autre, destinées à engendrer des vibrations acoustiques, les électrodes (7 ; 8) étant agencées sur les grands côtés longitudinaux (9 ; 10) de la plaque de résonance (5), comportant en outre des générateurs (6) pour engendrer des vibrations acoustiques, lesquels sont agencés asymétriquement par rapport à un plan (S) coupant de façon symétrique et transversale la plaque de résonance (5), et les électrodes (7 ; 8) étant en liaison avec une source d'excitation (18), **caractérisé en ce que** des deux côtés du plan (S) coupant de façon symétrique et transversale est agencé un générateur (6) respectif pour engendrer des vibrations acoustiques pour une direction de mouvement respective, les générateurs (6) pouvant être pilotés séparément pour inverser la direction de mouvement de l'élément (4) mobile au moyen d'un commutateur (19), et les vibrations acoustiques se présentant sous forme d'onde spatiale asymétrique.

2. Piézomoteur selon la revendication 1, **caractérisé en ce que** les générateurs (6) présentent une électrode de face postérieure (8) commune.

3. Piézomoteur selon l'une des revendications 1 ou 2, **caractérisé en ce que** au moins un des petits côtés longitudinaux (11) présente une gorge de guidage, une rainure de guidage ou un rail de guidage (12 ; 30).

4. Piézomoteur selon la revendication 3, **caractérisé en ce que** la gorge de guidage, la rainure de guidage ou le rail de guidage (12 ; 30) présente un revêtement (14) résistant à l'usure ou est constitué(e) en un matériau similaire résistant à l'usure.

5. Piézomoteur selon l'une quelconque des revendications précédentes, **caractérisé en ce que** l'élément mobile (4) est réalisé sous forme de pince-ressort (17) qui est en coopération mécanique avec les petits côtés longitudinaux (11).

6. Piézomoteur selon la revendication 5, **caractérisé en ce que** la pince-ressort (17) présente une forme de U ou de V, les branches libres portant un élément de friction (16) et l'élément de friction (16) possédant respectivement une forme complémentaire à la gorge de guidage, la rainure de guidage ou au rail de guidage (12 ; 30).

7. Piézomoteur selon la revendication 6, **caractérisé en ce que** les branches de la pince-ressort (17) renferment une zone de fixation ou un tronçon de fixation qui est réalisé sous forme de monture (37) pour un élément à déplacer, en particulier pour une lentille (36).

8. Piézomoteur selon l'une quelconque des revendications précédentes, **caractérisé en ce que** la plaque de résonance (5) est constituée par un corps piézoélectrique monolithique.

9. Piézomoteur selon l'une des revendications 1 à 7, **caractérisé en ce que** la plaque de résonance (5) est constituée par un matériau non piézoélectrique, les générateurs (6) pour engendrer des vibrations acoustiques étant reliés de façon mécaniquement rigide avec la plaque de résonance (5).

10. Procédé de fonctionnement électrique d'un piézomoteur linéaire à ultrasons selon les caractéristiques d'au moins une des revendications précédentes, **caractérisé en ce que** la source d'excitation est réalisée sous forme de générateur à rétroaction par courant autorégulateur avec fréquence de travail ($F_a$) fixe, la fréquence de travail ($F_a$) étant prédéterminée par la fréquence de résonance de l'oscillateur piézoélectrique qui mène à l'excitation d'une onde spatiale asymétrique stationnaire selon l'équation

$$\bar{F}_a = m \cdot N/L$$

dans laquelle

L = longueur de la plaque de résonance
N = constante de fréquence
m = ordre de l'onde.

Fig.1

Fig.2

Fig.3

Fig.4

23    23    23    11

7

21

23    23    23    11

7

21

Fig. 5

22
25    24
11    11

Fig. 6

Fd

11    16    s    4

13    Fs    1

7    5

6    26

11

27

Fig.7

Fig.8

Fig.9

Fig.10

Fig.11

Fig.12

Fig.13

**IN DER BESCHREIBUNG AUFGEFÜHRTE DOKUMENTE**

**In der Beschreibung aufgeführte Patentdokumente**

- US PS4978882 A
- US PS5672930 A
- DE 19945042 C2
- EP 0595426 A1

- US 20010015591 A1
- JP 59204477 A
- US 4510411 A
- US 5982075 A